# EUROPEAN PATENT APPLICATION

(11) **EP 4 818 575 A1**
(43) Date of publication of application: **07.10.2026**
(21) Application number: 24893588.4
(22) Date of filing: 22.11.2024
(51) Int. Cl.: F21S 8/00, F21S 19/00

(54) **LIGHTING FIXTURE**

(30) Priority: 23.11.2023 CN 202323184206 U
(71) Applicant: Opple Lighting Co., Ltd., Shanghai 201201 (CN); Suzhou Opple Lighting Co., Ltd., Suzhou, Jiangsu 215211 (CN)
(72) Inventor: LIU, Chaobo, Shanghai 200120 (CN); LIU, Haisheng, Shanghai 200120 (CN); HU, Haiqiang, Shanghai 200120 (CN); YANG, Xiaotong, Shanghai 200120 (CN); LIU, Zheng, Shanghai 200120 (CN)
(74) Representative: Winter, Brandl - Partnerschaft mbB
(86) International application number: PCT/CN2024/133851
(87) International publication number: WO 2025/108434

(57) **Abstract**

A lighting fixture (100), comprising : a housing (600), the housing (600) comprising a bottom wall (610) and a frame (620) extending from the bottom wall (610) in a direction away from the bottom wall (610); a surface light-emitting apparatus (200), disposed on the bottom wall (610) and surrounded by the frame (620), and having a first light-emitting surface (201), the first light-emitting surface (201) simulating sunlight; and a projection system (400), comprising at least one projection apparatus (410), the projection apparatus (410) being installed in the frame (620) and configured to project a light spot, the shape of the light spot being consistent with the shape of the first light-emitting surface (201).

## Description

The present application claims the priority of the Chinese patent application No. 202323184206.8, filed on November 23, 2023, titled "Lighting Fixture", the entire contents of which are incorporated by reference in the present application.

### TECHNICAL FIELD

The present application relates to the field of lighting, and in particular to a lighting fixture.

### BACKGROUND

With the improvement of living standards, people's demands for lighting in different scenarios have become increasingly high. Among these, lighting fixtures capable of simulating outdoor natural ambient light have gradually gained market favor and are widely used in indoor lighting for homes, office buildings, shopping malls, stadiums, railway stations, airports, and other venues. Traditional blue-sky lamps generally consist of a light source and a pattern panel depicting blue sky and white clouds, and illuminate the pattern panel through the light source to create an outdoor blue-sky lighting environment. However, this solution cannot authentically reproduce the matching effect of blue sky and sunlight, resulting in poor layering, lack of three-dimensionality, and unsatisfactory simulation fidelity.

In response to this, blue-sky lamp designs utilizing a light source combined with a scattering panel have appeared on the market to produce light similar to natural sunlight. However, when real sunlight enters a room through a window, it forms light spots on the indoor walls or floor.

In view of this, it is indeed necessary to propose a lighting fixture capable of simulating the light spots formed when sunlight shines through a window onto walls or a floor.

### SUMMARY

The purpose of the present application is to provide a lighting fixture that projects light spots.

In order to achieve the above purpose, the present application provides a lighting fixture, including: a housing, including a bottom wall and an outer frame extending from the bottom wall in a direction away from the bottom wall; a surface light-emitting device, disposed on the bottom wall and surrounded by the outer frame, including a first light exiting surface, wherein the first light exiting surface is configured to simulate light of sunlight; a projection system, including at least one projection device, a projection device of the at least one projection device being mounted in the outer frame, the projection device being configured to project a light spot, and a shape of the light spot being consistent with a shape of the first light exiting surface.

Optionally, a spectrum of the surface light-emitting device approximates a spectrum of sunlight, so that the first light exiting surface simulates light of sunlight; or, a spectrum of the surface light-emitting device is a white light spectrum, and the surface light-emitting device further includes a diffusion structure, the diffusion structure including nanoparticles to form Rayleigh scattering, so that the first light exiting surface simulates light of a blue sky.

Optionally, each of the at least one projection device includes a light-emitting assembly, a lens barrel assembly fixedly connected to the light-emitting assembly, and a lens assembly disposed inside the lens barrel assembly, the lens assembly is disposed on a light output path of the light-emitting assembly and configured to adjust a light output angle of the light-emitting assembly, the outer frame includes an opening, and a side of the lens barrel assembly away from the light-emitting assembly is exposed from the outer frame through the opening.

Optionally, the lens barrel assembly includes at least two lens barrels connected detachably, one lens is correspondingly disposed in each lens barrel of the at least two lens barrels.

Optionally, the lens barrel assembly includes a first lens barrel, a second lens barrel, and a third lens barrel that are detachably connected in sequence, the first lens barrel is connected to the light-emitting assembly, the third lens barrel is at least partially exposed from the outer frame, and the lens assembly including a first lens disposed in the first lens barrel, a second lens disposed in the second lens barrel, and a third lens disposed in the third lens barrel.

Optionally, the projection device further includes an aperture member, the aperture member is disposed between the light-emitting assembly and the first lens and configured to control an intensity and a shape of a light beam projected by an LED bead.

Optionally, the projection system includes a plurality of projection devices, and directions of light beams emitted by the plurality of projection devices are different.

Optionally, the projection device is movably connected to the outer frame through a connection member, and the projection device is rotatable relative to the outer frame, so that the projection device forms a simulated sunlight spot of a predetermined shape on a wall surface or a floor surface in different directions.

Optionally, the simulated sunlight spot of the predetermined shape includes at least one selected from the group consisting of a circular light spot, an elliptical light spot, and a quadrilateral light spot.

Optionally, the surface light-emitting device includes a first light-emitting module, light emitted by the first light-emitting module exits through the first light exiting surface to form simulated sunlight, and a simulated sunlight spot formed by irradiation of the light-emitting assembly in the projection device is distributed on an outer side of the simulated sunlight formed by the first light-emitting module.

Compared with the prior art, the technical solution of the present application has the following beneficial effects: the projection system in the lighting fixture of the present application can project light spots onto the floor or walls to simulate the light and shadow effect of real sunlight shining through a window onto the floor or walls; the shape of the light spots projected by the projection system is consistent with the shape of the first light exiting surface, thereby enhancing the visual experience of the lighting fixture.

### BRIEF DESCRIPTION OF DRAWINGS

Fig. 1 is a three-dimensional structural diagram of a lighting fixture according to one embodiment of the present application.
Fig. 2 is a cross-sectional view of the lighting fixture shown in Fig. 1.
Fig. 3 is an exploded structural schematic diagram of the lighting fixture shown in Fig. 1.
Fig. 4 is a plan view schematic diagram of the first light-emitting module in the lighting fixture shown in Fig. 3.
Fig. 5 is a schematic diagram of the light-emitting block in the first light-emitting module shown in Fig. 3.
Fig. 6 is a schematic diagram of the second light-emitting module in the lighting fixture described in Fig. 3.
Fig. 7 is an exploded structural schematic diagram of Embodiment 2 of a side light-emitting device in the present application.
Fig. 8 is a schematic diagram of the second light-emitting module in Fig. 7.
Fig. 9 is an exploded structural schematic diagram of a light guide piece of Embodiment 3 of a side light-emitting system in the present application.
Fig. 10 is a three-dimensional structural diagram of a projection device according to one embodiment of the present application.
Fig. 11 is an exploded structural schematic diagram of the projection device shown in Fig. 10.
Fig. 12 is a lighting effect diagram of a lighting fixture according to a preferred embodiment of the present application.
Fig. 13 is a lighting effect diagram of a surface light-emitting device and a side light-emitting device of a lighting fixture according to a preferred embodiment of the present application.

### Reference numerals:

100-lighting fixture;
200-surface light-emitting device; 201-first light exiting surface; 210-first light-emitting module; 211-first substrate; 212-light-emitting block; 2121-first light-emitting unit; 2122-second light-emitting unit; 220-diffusion structure; 240-transparent plate; 250-inner frame;
300-side light-emitting device; 301-second light exiting surface; 302-non-light-exiting surface; 303-virtual image; 304-light/shadow transition region; 310-second light-emitting module; 311-second substrate; 312-light-emitting element; 320-light guide assembly; 321-light exiting piece; 322-light guide piece; 3221-V-prism microstructure; 323-reflective sheet; 324-light-shielding piece; 325-annular lens;
400-projection system; 410-projection device; 420-light-emitting assembly; 421-aluminum substrate; 422-LED bead; 430-lens assembly; 431-first lens; 432-second lens; 433-third lens; 440-aperture member; 450-lens barrel assembly; 451-first lens barrel; 452-second lens barrel; 453-third lens barrel;
500-mounting system;
600-housing; 610-bottom wall; 620-outer frame.

### DETAILED DESCRIPTION

In order to make objectives, technical solutions and advantages of the present application clearer, the present application will be described in detail below with reference to the accompanying drawings and specific embodiments.

It should be noted that, in order to avoid obscuring the present application with unnecessary details, only the structures and/or processing steps closely related to the solution of the present application are illustrated by the drawings, while other details that are not related to the present application are omitted.

In addition, it should be noted that the terms "includes," "comprises," or any other variation thereof are intended to cover a non-exclusive inclusion, such that a process, method, article, or apparatus that includes a list of elements not only includes those elements, but also includes other elements not expressly listed, or elements inherent to such a process, method, article, or apparatus.

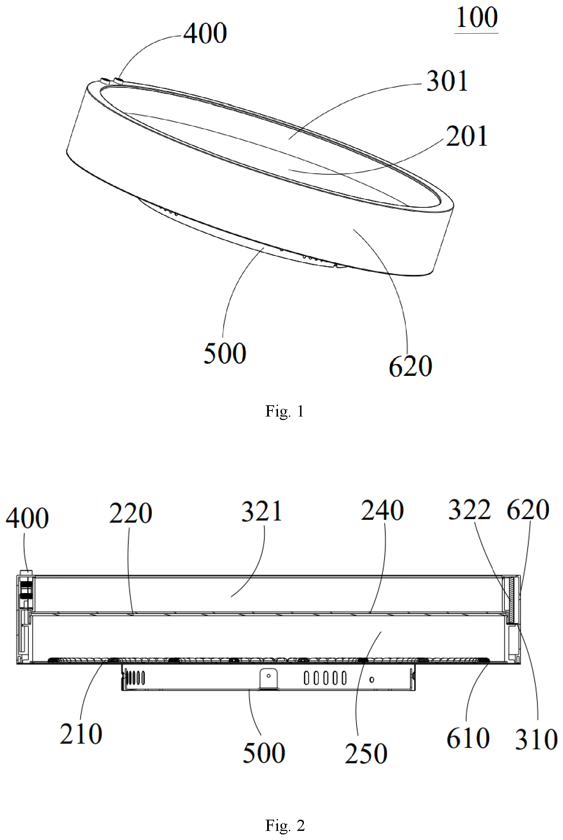

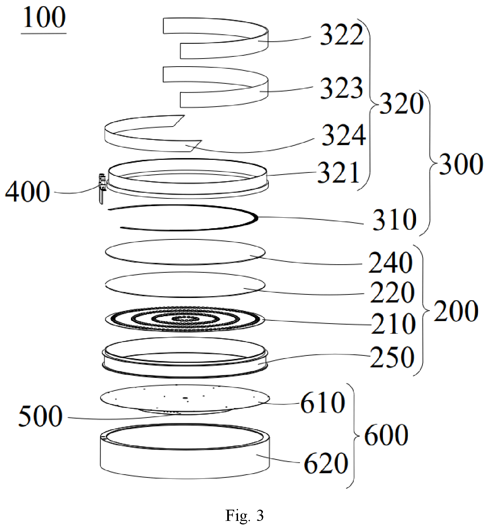

As illustrated by Figs. 1-3, a lighting fixture 100 according to a preferred embodiment of the present application includes a surface light-emitting device 200, a side light-emitting device 300, and a projection system 400. The surface light-emitting device 200 is configured to simulate sunlight at different periods of the day in nature. The side light-emitting device 300 is arranged around an outer side of the surface light-emitting device 200 and is configured to simulate the effect of sunlight illuminating edges of a skylight. In addition, the side light-emitting device 300 is further configured to form a virtual image 303. The projection system 400 is arranged at a side of the side light-emitting device 300 and is configured to form a light spot on the floor or wall.

The lighting fixture 100 includes a housing 600. The housing 600 includes a bottom wall 610 and an outer frame 620 extending from the bottom wall 610 in a direction away from the bottom wall 610, with a light outlet formed between the bottom wall 610 and the outer frame 620. The surface light-emitting device 200 includes a first light-emitting module 210 and a diffusion structure 220. The first light-emitting module 210 is fixedly connected to the bottom wall 610 and is configured to emit light toward the diffusion structure 220. The diffusion structure 220 is mounted within the outer frame 620 and covers the first light-emitting module 210. The diffusion structure 220 is configured to homogenize the light emitted by the first light-emitting module 210.

In an optional embodiment, the surface light-emitting device 200 is a ceiling-mounted lamp including a base plate, a cover, and the first light-emitting module 210, wherein the first light-emitting module 210 is a full-spectrum LED chip configured to simulate a daylight spectrum. In other embodiments, the first light-emitting module 210 may also be a conventional white light source, and nanoparticles may be added to the diffusion structure 220 of the surface light-emitting device 200 to produce Rayleigh scattering, causing the first light exiting surface 201 to exhibit a blue color resembling the sky. The present application is not limited in this regard.

As illustrated by Figs. 2-5, in a preferred embodiment of the present application, the surface light-emitting device 200 includes the first light-emitting module 210 and the diffusion structure 220. The first light-emitting module 210 includes a first substrate 211 and a plurality of light-emitting blocks 212. The first substrate 211 is fixedly connected to the bottom wall 610, and the light-emitting blocks 212 are mounted on the side of the first substrate 211 facing away from the bottom wall 610 and are electrically connected via the first substrate 211.

The light-emitting block 212 includes at least two type light-emitting units, and the at least two type light-emitting units are configured to emit light of at least two different spectra. The at least two type light-emitting units are arranged in an alternating pattern, and adjacent light-emitting units of the same type are arranged in an inverted orientation relative to each other.

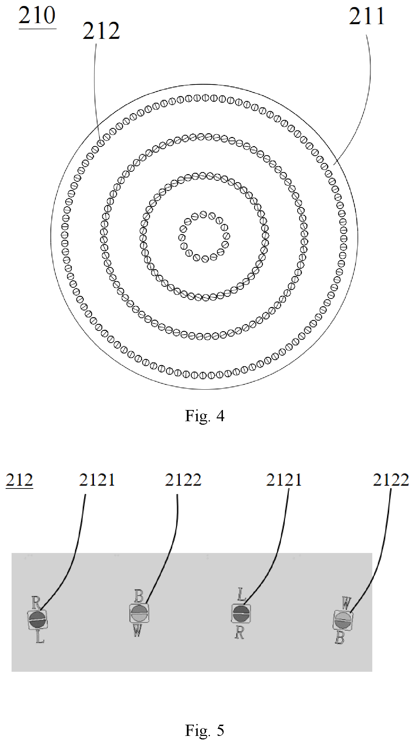

As illustrated by Fig. 5, in a preferred embodiment, the light-emitting block 212 on the first light-emitting module 210 includes a first light-emitting unit 2121 and a second light-emitting unit 2122, wherein the first light-emitting unit 2121 and the second light-emitting unit 2122 are arranged alternately, and adjacent first light-emitting units 2121 are arranged in an inverted orientation relative to each other, adjacent second light-emitting units 2122 are arranged in an inverted orientation relative to each other. The first light-emitting unit 2121 includes any two of four light-emitting elements with different colors, and the second light-emitting unit 2122 includes the remaining two light-emitting elements from among the four light-emitting elements. Within a single light-emitting block, the arrangement from left to right is: the first light-emitting unit 2121, the second light-emitting unit 2122, the first light-emitting unit 2121, and the second light-emitting unit 2122. The two different types of light-emitting units, namely the first light-emitting unit 2121 and the second light-emitting unit 2122, are arranged alternately, while adjacent light-emitting units of the same type are arranged in an inverted orientation. Through the four light-emitting elements with different colors, various lighting effects can be achieved. The alternating arrangement of different types of light-emitting units and the inverted arrangement of same-type light-emitting units result in a more uniform color of light emitted by the surface light-emitting device 200, which can simulate the color of sunlight at different times of the day, thereby achieving a dynamic lighting effect.

In the present embodiment, each light-emitting block includes two first light-emitting units 2121 and two second light-emitting units 2122. In other embodiments, the number of first light-emitting units 2121 and second light-emitting units 2122 included in each light-emitting block 212 may be greater; the present application is not limited in this regard.

A light source lens (not shown) is further sleeved over the light-emitting units of each light-emitting block. In the present embodiment, each light-emitting unit is mounted with the light source lens, i.e., the light source lenses and the light-emitting units are arranged in a one-to-one correspondence. Such an arrangement allows the light emitted by each light-emitting unit to be concentrated at the center of the corresponding light source lens before being emitted outward, thereby avoiding interference between light rays. In other embodiments, the light source lens may also be a 2-in-1, 4-in-1, or other multi-in-one lens, so that a single light source lens may cover more light-emitting units, or a single light source lens covering all light-emitting units may be used, which reduces the number of light source lenses required and makes production and assembly more convenient and efficient.

In the present embodiment, the light-emitting units are arranged in a circular pattern on the first substrate 211. Specifically, the light-emitting units are arranged in a plurality of concentric circles, with the number of light-emitting units in each circle being a multiple of 6, 7, or 8. The number of light-emitting units in each concentric circle is determined based on the voltage of the light-emitting units and the voltage of the driving power supply. In the present embodiment, the voltage of the LED bead 422 is 3V and the voltage of the driving power supply is 24V; accordingly, a series-8 configuration is adopted, meaning the number of light-emitting units in each concentric circle is a multiple of 8.

In the present embodiment, the first substrate 211 has a total of Ri circles of light-emitting units, where i ≥ 2. The R1 circle includes N light-emitting units, the R2 circle includes 2N light-emitting units, and the Ri circle includes i*N light-emitting units. Assuming the R1 circle is 1 series, labeled 1_1, the R2 circle is 2 series, labeled 2_1 and 2_2, and so forth, with the Ri circle labeled i_1 through i_i, there are a total of i*(i+1)*(i+2)/6 series, which is equivalent to i*(i+1)*(i+2)/6 adjustable beams. Since four light-emitting elements with different colors are used, color and brightness adjustments can be made across 4*i*(i+1)*(i+2)/6 zones. By precisely controlling the power of the light-emitting units in each different zone via the control system, a continuous variation in lighting from morning to night can be achieved.

In other embodiments, the light-emitting units on the first substrate 211 may also be arranged in other patterns such as a concentric-square layout; the present application is not limited in this regard.

The surface light-emitting device 200 includes an inner frame 250 and a diffusion structure 220. The inner frame 250 is sleeved in the outer frame 620, and the diffusion structure 220 is fixedly connected to the end of the inner frame 250 away from the first light-emitting module 210. Light emitted by the light-emitting units in the first light-emitting module 210 passes through the diffusion structure 220, which diffuses the light and converts a line light source or point light source into a uniform surface light source. In the present embodiment, the diffusion structure 220 is a diffusion plate having a transmittance of 40%-65% and a thickness of approximately 3 mm.

The diffusion plate can effectively eliminate the granular appearance of the light emitted by the first light-emitting module 210 and functions to diffuse light, i.e., light scatters at its surface and is spread out softly and uniformly. After being diffused by the diffusion plate, the light illuminates a larger area with better uniformity and stable chromaticity.

In some other embodiments, the diffusion structure 220 may also be a structural member incorporating a microstructure, which likewise covers the light-emitting module and can also achieve good light homogenization; the present application is not limited in this regard.

In some embodiments, the surface light-emitting device 200 further includes a transparent plate 240. The transparent plate 240 is fixedly connected to the end of the outer frame 620 away from the first light-emitting module 210, and is located at a side of the first light exiting surface 201 facing away from the first light-emitting module 210. The side of the transparent plate 240 facing away from the first light exiting surface 201 is a mirror surface. At least a portion of the light emitted by the side light-emitting device 300 passes through the second light exiting surface 301 and is projected onto the transparent plate 240, where it is reflected to form a virtual image 303. This simulates the window shadow effect formed on a window when one side of the window is illuminated by sunlight, creating a sense of depth and transparency to the human eye.

The mirror surface of the transparent plate 240 has a reflectance greater than its transmittance for light, thereby limiting the entry of external light through the light exiting surface into the transparent plate 240. Optionally, the transparent plate 240 may be made of an inorganic material, such as quartz glass. The transparent plate 240 may also be made of an organic material, such as acrylic or other polymer transparent materials; the present application is not limited in this regard.

In some embodiments, a very thin one-way film layer, such as tin, silver, or aluminum, is deposited onto the light exiting surface of the transparent plate 240 via a crystal plating process to form the one-way film layer. The crystal plating process enables the one-way film layer to achieve relatively high smoothness. In other embodiments, the transparent plate 240 may be selected based on actual conditions, and no limitation is imposed here. The thickness of the one-way film layer may be adjusted according to actual conditions. As the thickness of the one-way film layer increases, its reflectance and transmittance change accordingly; the one-way see-through effect is achieved by utilizing the reflectance higher than the transmittance.

By controlling the variation in brightness of the light-emitting units in different zones, lighting effects for different modes such as morning glow and sunset can be achieved.

The side light-emitting device 300 is detachably connected to the lighting fixture 100 and is arranged between the outer frame 620 and the surface light-emitting device 200, surrounding the first light exiting surface 201 of the surface light-emitting device 200. The side light-emitting device 300 extends along the light emission direction of the first light-emitting module 210 and includes a second light exiting surface 301 that is attached to the side of the outer frame 620 close to the first light exiting surface 201. The side light-emitting device 300 further includes a second light-emitting module 310. In the horizontal direction, the second light-emitting module 310 is located between the second light exiting surface 301 and the outer frame 620. Light emitted by the second light-emitting module 310 passes through the second light exiting surface 301 and is directed away from the outer frame 620. The side light-emitting device 300 emits light differently from a conventional ambient lamp, the side light-emitting device 300 emits light only toward the interior of the lighting fixture 100. In the present embodiment, the outer frame 620 is made of a light-opaque material, thereby creating the visual effect of sunlight entering through and illuminating the sill of a window, visually simulating a light-transmitting window opening.

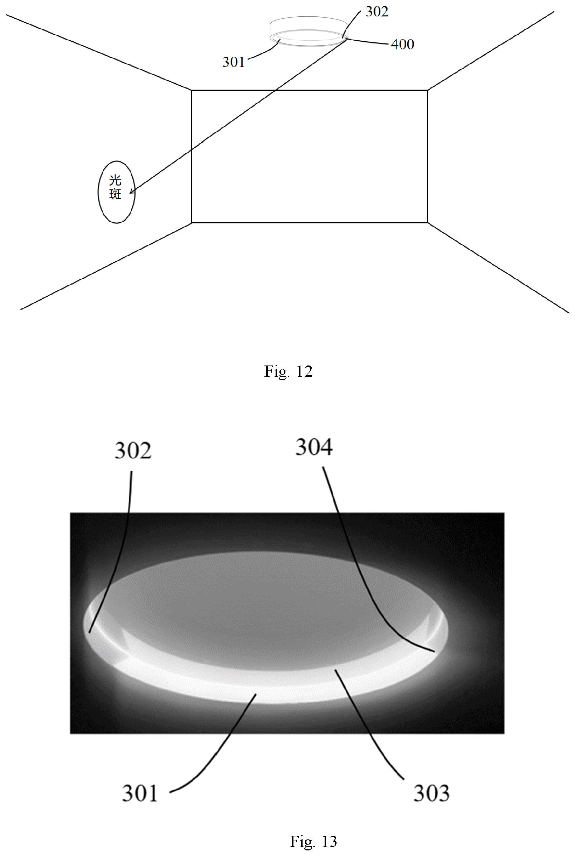

The side light-emitting device 300 further includes a non-light-exiting surface 302, which is likewise arranged facing away from the outer frame 620. A light/shadow transition region 304 is formed between the non-light-exiting surface 302 and the second light exiting surface 301. As illustrated by Fig. 13, this simulates the effect of sunlight entering from one side to illuminate one side of the window outer frame 620, while leaving another side of the window outer frame 620 in shadow, making the visual effect more realistic. The second light exiting surface 301 and the non-light-exiting surface 302 are circumferentially joined to form an annular surface surrounding the outer periphery of the first light exiting surface 201. The light/shadow transition region 304 is located at the junction of the second light exiting surface 301 and the non-light-exiting surface 302. The light/shadow transition region 304 functions as a boundary region of light and shadow between the second light exiting surface 301 and the non-light-exiting surface 302, and may take the form of a continuous gradual transition from bright to dark, or a distinct boundary line.

The side light-emitting device 300 includes a second substrate 311 surrounding the first light exiting surface 201 and a light-emitting element 312 arranged on the second substrate 311. The second substrate 311 includes a light-emitting region arranged close to the second light exiting surface 301 and a non-light-emitting region arranged away from the second light exiting surface 301, so as to form the second light exiting surface 301 illuminated and the non-light-exiting surface 302 unilluminated at the outer periphery of the first light exiting surface 201. The light-emitting element 312 is arranged in the light-emitting region of the second substrate 311, while the non-light-emitting region may have no light-emitting element 312 arranged therein.

In some embodiments, the side light-emitting device 300 further includes a light-shielding piece 324 facing away from the second light exiting surface 301. The second light-emitting module 310 and the light-shielding piece 324 together surround the side of the first light exiting surface 201 close to the outer frame 620, so as to form the second light exiting surface 301 illuminated and the non-light-exiting surface 302 unilluminated at the outer periphery of the first light exiting surface 201.

The side light-emitting device 300 may be arranged as a whole to undergo rotational movement relative to the surface light-emitting device 200. A micro motor arranged within the lighting fixture 100 drives the side light-emitting device 300 to rotate, so as to better simulate the effect of the sun rising in the east and setting in the west.

The side light-emitting device 300 is described below through three specific embodiments, which should not be taken as limiting.

### Embodiment 1

As illustrated by Figs. 2-3 and Fig. 6, in the present embodiment, the light emission direction of the second light-emitting module 310 is the same as the light emission direction of the first light-emitting module 210. The side light-emitting device 300 includes a second light-emitting module 310 and a light guide assembly 320. The light guide assembly 320 includes a light guide piece 322 and a light exiting piece 321. The light guide piece 322 is arranged below the second light-emitting module 310, and the second light-emitting module 310 emits light toward the light guide piece 322 (i.e., the second light-emitting module 310 emits light in a direct-lit manner). The light guide piece 322 is configured to refract the light emitted by the second light-emitting module 310. The light exiting piece 321 is located at a side of the light guide piece 322 facing away from the outer frame 620. After being refracted by the light guide piece 322, the light exiting from the light guide piece 322 is then directed through the light exiting piece 321 and emitted toward the side facing away from the outer frame 620. The light guide piece 322 can control the exiting angle of the light, enabling light to exit at a small angle with a greater projection distance and stronger transparency.

In some other embodiments, the light emitted by the second light-emitting module 310 may also enter the light guide assembly 320 vertically upward; the present application is not limited in this regard.

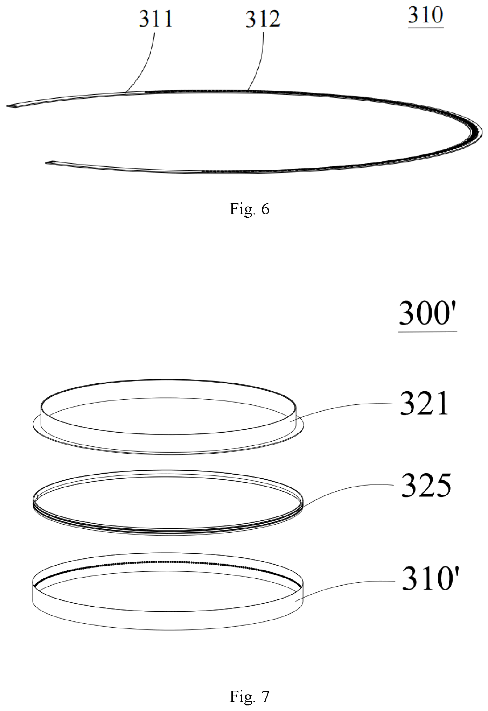

As illustrated by Fig. 6, the second light-emitting module 310 includes a second substrate 311 and a light-emitting element 312 mounted on a partial region of the second substrate 311. When the light-emitting element 312 of the second light-emitting module 310 emit light outward, the region of the light guide assembly 320 corresponding to the light-emitting element 312 on the second substrate 311 are in an illuminated state (i.e., the second light exiting surface 301 of the side light-emitting device 300), while the region of the light guide assembly 320 not corresponding to the light-emitting element 312 on the second substrate 311 are in a dark state (i.e., the non-light-exiting surface 302 of the side light-emitting device 300), thereby simulating the effect of sunlight passing through a window into a room and illuminating one edge of the window.

In some other embodiments, light-emitting elements 312 may also be mounted in all regions of the second substrate 311. By controlling the operating states of the light-emitting elements 312 in different regions and illuminating different positions to achieve variation in the light source, switching between illuminated and dark regions on the light exiting piece 321 can be realized, simulating the effect of sunlight striking the edge of a skylight at different angles during different periods of the day and achieving the simulation of sunrise and sunset. In the present embodiment, the outer frame 620 is made of a translucent or light-transmissive material. By controlling the different light-emitting colors of the light-emitting elements 312 in different regions, a rainbow effect can be formed through the outer frame 620, enhancing the visual experience of the lighting fixture 100.

Preferably, the materials of the light guide piece 322 and the light exiting piece 321 are transparent optical materials such as PMMA and PC.

The light exiting the light guide piece 322 passes through the light exiting piece 321. The light exiting piece 321 can eliminate the granular appearance of the light emitted by the second light-emitting module 310, while the light exiting through the light exiting piece 321 is more uniform.

A reflective sheet 323 is attached to the side of the light guide piece 322 away from the light exiting piece 321, so as to reflect light directed toward the region back into the light guide piece 322, causing all light within the light guide piece 322 to be emitted toward the light exiting piece 321 and improving light concentration.

A portion of the light exiting piece 321 not covered by the light guide piece 322 is covered by a light-shielding piece 324. The light-shielding piece 324 arranged here prevents light from leaking out of the portion of the light exiting piece 321, ensuring that the portion of the light exiting piece 321 remains in a dark state, thereby simulating the realistic effect of sunlight striking the edge of a window or skylight.

In some other embodiments, the light-shielding piece 324 may be arranged to rotate around the light guide piece 322. When light-emitting elements 312 are mounted in all regions of the second substrate 311, rotating the light-shielding piece 324 can achieve variation between the illuminated and dark regions on the light exiting piece 321.

The height of the light-shielding piece 324 may be adjusted according to actual conditions, using a micro motor in conjunction with an arranged elastic member for adjustment.

### Embodiment 2

As illustrated by Figs. 7-8, in the present embodiment, the light emission direction of the second light-emitting module 310' intersects with the light emission direction of the first light-emitting module 210. The side light-emitting device 300 includes a light exiting piece 321. The light exiting piece 321 is arranged between the outer frame 620 and the first light exiting surface 201 and extends beyond the first light exiting surface 201 along the extension direction of the outer frame 620. The second light-emitting module 310' is arranged at a side of the light exiting piece 321 facing toward the outer frame 620. The second light-emitting module 310' includes a second substrate 311' annular in shape and a light-emitting element 312 mounted on the inner side of the substrate. The second light-emitting module 310' emits light toward the light exiting piece 321, and the emitted light enters the light exiting piece 321 directly through the side surface of the light exiting piece 321.

The side light-emitting device 300' further includes an annular lens 325. The annular lens 325 is located between the light exiting piece 321 and the second light-emitting module 310'. The annular lens 325 is connected to the inner side of the second substrate 311' and covers the light-emitting element 312. The light emitted by the light-emitting element 312 is incident on the light incident surface of the annular lens 325, where refraction occurs. The light enters the annular lens 325 under the conditions satisfying Snell's law, then undergoes refraction at the light exiting surface, and exits the annular lens 325 and then passes through the light exiting piece 321 to achieve uniform light emission.

In the present embodiment, the second substrate 311' may optionally be a flexible printed circuit board (FPC); in other embodiments, the second substrate 311' may also be made of other materials.

Preferably, the material of the light exiting piece 321 is a transparent optical material such as PMMA or PC.

In some other embodiments, light-emitting elements 312 may also be mounted in all regions of the second substrate 311', with the second substrate 311' divided into multiple light-emitting regions, each including a plurality of light-emitting elements 312. Each light-emitting region can be independently controlled for illumination. By controlling the operating states of different light-emitting regions, switching between illuminated and dark regions on the light exiting piece 321 can be realized, simulating the effect of sunlight striking the edge of a skylight at different angles during different periods of the day.

In some other embodiments, when light-emitting elements 312 are mounted in all regions of the second substrate 311', a light-shielding piece 324 may further be attached to a partial region of the light exiting piece 321 to prevent light from leaking out of the portion of the light exiting piece 321, keeping the portion of the light exiting piece 321 in a dark state and simulating the realistic effect of sunlight striking the edge of a window or skylight. The light-shielding piece may be rotated; by rotating the light-shielding piece 324, variation in the illuminated region of the light exiting piece 321 can be achieved, simulating the effect of sunrise and sunset.

The overall structure of the side light-emitting device 300 in this embodiment is more simplified, with the second light-emitting module 310' surrounding the outer side of the light exiting piece 321, making assembly more convenient and efficient.

### Embodiment 3

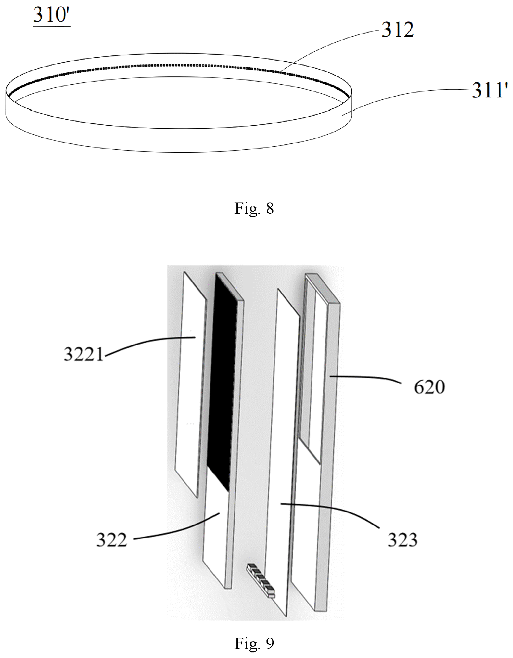

In the present embodiment, the structure of the side light-emitting device 300 is substantially the same as that of Embodiment 1. The side light-emitting device 300 emits light only toward the side facing away from the outer frame 620. The light guide assembly 320 includes a light exiting piece 321 and a light guide piece 322. The second light-emitting module 310 is fixedly connected to one end of the light exiting piece 321. The light guide piece 322 is arranged around the outer side of the light exiting piece 321, and the upper surface of the light guide piece 322 covers the light-emitting element 312 of the second light-emitting module 310. The difference is that, as illustrated by Fig. 9, the light guide piece 322 in the present embodiment is provided with a V-prism microstructure 3221. The V-prism microstructure 3221 is located in the region of the light guide piece 322 away from the second light-emitting module 310, and the light exiting piece 321 includes an inverted V-prism microstructure. After light exits from the light-emitting element 312, the V-prism microstructure 3221 of the light guide piece 322 disrupts total internal reflection, causing light to exit at a large angle from the region of the light guide piece 322 where the V-prism microstructure 3221 is arranged. The light exiting from the light guide piece 322 enters the light exiting piece 321 including the inverted V-prism microstructure. By utilizing the inverted V-prism microstructure, a portion of the light can exit at a small angle onto the transparent plate 240 and, upon reflection, form a transparent virtual image 303.

Wherein the angles of both the shadow-facing surface and the light-facing surface of the V-prism microstructure 3221 at the bottom of the light guide piece 322 are each less than 6 degrees. Furthermore, the angle varies as a function of the distance between the light-emitting element 312 and the light incident side of the light guide piece 322, and the depth of the V-grooves also varies accordingly. For the light-facing surface with an angle less than 6 degrees, after light enters from the light incident side, the exiting angle from the light exiting surface is in the direction of 165 degrees to 175 degrees. The V-prism microstructure 3221 at the light exiting side compresses the light toward the center to within 30 degrees. The 165 degrees to 175 degrees light exiting therefrom can achieve small-angle emission through the inverted V-prism of the light exiting piece 321, exiting at an angle of less than 10 degrees. The uniformity of the light exiting surface of the light guide piece 322 can be adjusted by varying the angles of the light-facing and shadow-facing surfaces and the depth of the V-grooves.

Preferably, the angles of both the shadow-facing surface and the light-facing surface of the V-prism of the light guide piece 322 are each between 0.25 degrees and 0.75 degrees, and the apex angle of the inverted V-prism of the light exiting piece 321 is between 55 degrees and 70 degrees.

A reflective piece 323 covers the side of the light guide piece 322 away from the light exiting piece 321, so as to reflect light directed toward the region within the light guide piece 322, causing all light within the light guide piece 322 to be directed toward the light exiting piece 321.

The lighting fixture 100 further includes a projection system 400. The projection system 400 is arranged between the outer frame 620 and the side light-emitting device 300, and is at least partially exposed from the outer frame 620. The projection system 400 is configured to project a simulated sunlight spot onto a wall or floor, including shapes such as a circular light spot, an elliptical light spot, or a quadrilateral light spot, similar to the projection produced by sunlight passing through a window.

The projection system 400 includes a plurality of projection devices 410. In the present embodiment, two projection devices 410 are provided. Each of the two projection devices 410 is movably connected to the outer frame 620 of the lighting fixture 100 via a connection member, and each projection device 410 is rotatable relative to the outer frame 620.

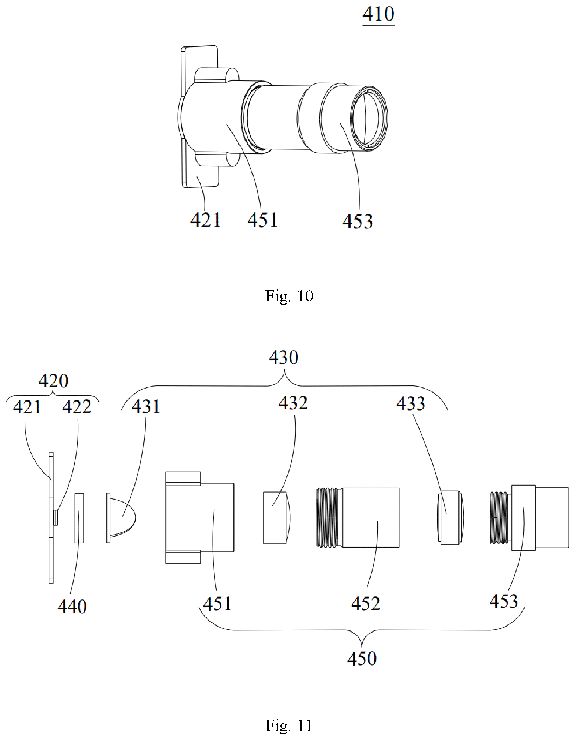

As illustrated by Figs. 10-11, the projection device 410 includes a light-emitting assembly 420, a lens barrel assembly 450, and a lens assembly 430. The light-emitting assembly 420 is fixedly connected to the light exiting piece 321. The light-emitting assembly 420 includes an aluminum substrate 421 and an LED bead 422 mounted on the aluminum substrate 421. An aperture member 440 is sleeved over the LED bead 422 and abuts the aluminum substrate 421. The aperture member 440 is configured to control the intensity and shape of the beam emitted by the LED bead 422. A first lens 431 is connected to the end of the aperture member 440 away from the LED bead 422 and is configured to form a light spot. A first lens barrel 451 is sleeved over the outer side of the aperture member 440 and the first lens 431. A second lens barrel 452 is screwed to the end of the first lens barrel 451 away from the first lens 431, and a second lens 432 is embedded in the side of the second lens barrel 452 close to the first lens barrel 451. A third lens barrel 453 is screwed to the end of the second lens barrel 452 away from the first lens barrel 451, and a third lens 433 is embedded in the end of the third lens barrel 453 away from the second lens barrel 452. The second lens 432 and the third lens 433 are configured for imaging. Focal length adjustment is achieved through the arrangement of the first lens barrel 451, second lens barrel 452, and third lens barrel 453.

The first lens 431 and the second lens 432 are plastic lenses, and the third lens 433 is a glass lens. Plastic lenses are lighter in weight, which is beneficial for reducing the overall weight of the structure, while the glass lens ensures higher light transmittance.

In the present embodiment, the LED bead 422 is an LED lamp bead. In other embodiments, other types of lamp beads may also be used; the present application is not limited in this regard.

As illustrated by Fig. 12, the projection direction of the projection system 400 is consistent with the direction of the second light exiting surface 301. A light spot is projected onto the wall at a side of this region, simulating the projection produced on the wall by actual sunlight passing through a window in the direction of real sunlight illumination.

The lighting fixture 100 further includes a control system. The control system controls the operation of the surface light-emitting device 200, the side light-emitting device 300, and the projection system 400 to achieve lighting effects for multiple scenarios.

The mounting system 500 includes a mounting bracket. The mounting bracket is fixedly connected to the bottom wall 610, and the lighting fixture 100 is fixedly connected to a mounting surface via the mounting bracket. In the present embodiment, the mounting system 500 is a hanging bracket structure; in other embodiments, it may also be a quick-connect structure; the present application is not limited in this regard.

In summary, the surface light-emitting device 200 of the lighting fixture 100 of the present application can simulate effects such as blue sky, sunset, morning glow, and blue sky with white clouds. The side light-emitting device 300 simulates the effect of sunlight striking the edge of a window, making the lighting effect of the lighting fixture 100 more realistic. The side light-emitting device 300 can further form a virtual image on the transparent plate 240 arranged therein, producing a window shadow effect similar to sunlight striking the edge of a window or skylight, thereby creating a sense of space, depth, and layering. The projection system 400 can provide light spots similar to sunlight projected through a window or skylight onto the floor or wall, and the shape of the light spot varies with the overall shape of the lighting fixture 100, enabling application across multiple scenarios.

The above embodiments are only used to illustrate the technical solution of the present application, but not to limit it. Although the present application has been described in detail with reference to the preferred embodiments, it should be understood by those skilled in the art that the technical scheme of the application can be modified or replaced by equivalents without departing from the spirit and scope of the technical solution of the present application.

## Claims

1. A lighting fixture, comprising:
a housing (600), comprising a bottom wall (610) and an outer frame (620) extending from the bottom wall (610) in a direction away from the bottom wall (610);
a surface light-emitting device (200), disposed on the bottom wall (610) and surrounded by the outer frame (620), comprising a first light exiting surface (201), wherein the first light exiting surface (201) is configured to simulate light of sunlight;
a projection system (400), comprising at least one projection device (410), a projection device (410) of the at least one projection device (410) being mounted in the outer frame (620), the projection device (410) being configured to project a light spot, and a shape of the light spot being consistent with a shape of the first light exiting surface (201).

2. The lighting fixture according to claim 1, wherein a spectrum of the surface light-emitting device (200) approximates a spectrum of sunlight, so that the first light exiting surface (201) simulates light of sunlight; or, a spectrum of the surface light-emitting device (200) is a white light spectrum, and the surface light-emitting device (200) further comprises a diffusion structure (220), the diffusion structure (220) comprising nanoparticles to form Rayleigh scattering, so that the first light exiting surface (201) simulates light of a blue sky.

3. The lighting fixture according to claim 2, wherein each of the at least one projection device (410) comprises a light-emitting assembly (420), a lens barrel assembly (450) fixedly connected to the light-emitting assembly (420), and a lens assembly (430) disposed inside the lens barrel assembly (450), the lens assembly (430) is disposed on a light output path of the light-emitting assembly (420) and configured to adjust a light output angle of the light-emitting assembly (420), the outer frame (620) comprises an opening, and a side of the lens barrel assembly (450) away from the light-emitting assembly (420) is exposed from the outer frame (620) through the opening.

4. The lighting fixture according to claim 3, wherein the lens barrel assembly (450) comprises at least two lens barrels connected detachably, one lens is correspondingly disposed in each lens barrel of the at least two lens barrels.

5. The lighting fixture according to claim 4, wherein the lens barrel assembly (450) comprises a first lens barrel (451), a second lens barrel (452), and a third lens barrel (453) that are detachably connected in sequence, the first lens barrel (451) is connected to the light-emitting assembly (420), the third lens barrel (453) is at least partially exposed from the outer frame (620), and the lens assembly (430) comprising a first lens (431) disposed in the first lens barrel (451), a second lens (432) disposed in the second lens barrel (452), and a third lens (433) disposed in the third lens barrel (453).

6. The lighting fixture according to claim 5, wherein the projection device (410) further comprises an aperture member (440), the aperture member (440) is disposed between the light-emitting assembly (420) and the first lens (431) and configured to control an intensity and a shape of a light beam projected by an LED bead (422).

7. The lighting fixture according to claim 1, wherein the projection system (400) comprises a plurality of projection devices (410), and directions of light beams emitted by the plurality of projection devices (410) are different.

8. The lighting fixture according to claim 1, wherein the projection device (410) is movably connected to the outer frame (620) through a connection member, and the projection device (410) is rotatable relative to the outer frame (620), so that the projection device (410) forms a simulated sunlight spot of a predetermined shape on a wall surface or a floor surface in different directions.

9. The lighting fixture according to claim 8, wherein the simulated sunlight spot of the predetermined shape comprises at least one selected from the group consisting of a circular light spot, an elliptical light spot, and a quadrilateral light spot.

10. The lighting fixture according to claim 1, wherein the surface light-emitting device (200) comprises a first light-emitting module (210), light emitted by the first light-emitting module (210) exits through the first light exiting surface (201) to form simulated sunlight, and a simulated sunlight spot formed by irradiation of the light-emitting assembly (420) in the projection device (410) is distributed on an outer side of the simulated sunlight formed by the first light-emitting module (210).
